# EUROPEAN PATENT SPECIFICATION

(11) **EP 0 894 257 B1**
(45) Date of publication and mention of the grant of the patent: **12.07.2000**
(21) Application number: 97916523.0
(22) Date of filing: 09.04.1997
(51) Int. Cl.: G01N 1/02, B01L 3/02, G01N 35/10

(54) **CHEMICAL SAMPLING/DISPENSING APPARATUS**
VORRICHTUNG ZUR PROBENENTNAHME ODER DOSIERUNG IN DER CHEMIE
APPAREIL D'ECHANTILLONNAGE ET DE DISTRIBUTION DE SUBSTANCES CHIMIQUES

(30) Priority: 15.04.1996 GB 9607818
(43) Date of publication of application: 03.02.1999
(73) Proprietor: Mettler-Toledo Myriad Ltd., Melbourn, Royston, Herts SG8 6DN (GB)
(72) Inventor: GRAY, Richard, Henry, Cambridge CB2 5JZ (GB); CASSELLS, John, Maclaren, Huntingdon, Cambridgeshire PE17 2BN (GB)
(74) Representative: Haley, Stephen
(86) International application number: GB9700985
(87) International publication number: WO9739327

(56) References cited:
- EP-A- 0 517 606
- DE-A- 4 432 599
- US-A- 3 981 200
- US-A- 4 110 590
- US-A- 4 804 372
- US-A- 5 441 878

## Description

This invention relates to chemical sampling and dispensing.

In modern chemistry and, in particular, in modern organic chemistry, there often arises a need to obtain samples from and/or dispense samples to reaction vessels in which a chemical reaction is taking place. Whilst conventional sampling and dispensing devices, such as syringes and pipettes, are adequate for most liquid sampling and dispensing purposes, problems arise when the chemicals to be sampled or dispensed are solids, volatile, and/or react with water or air, or where the fluid may be at a lower temperature than the surrounding air. It has been traditional to obtain and dispense air sensitive liquid samples by employing a syringe fitted with a fine needle, and a septum on the vessel. The needle then has to have a narrow bore in order to minimise the surface area of fluid exposed to the air and to repeatedly pierce the septum without the septum incurring damage to the point where it would leak.

Such devices have problems, however, in that they are unable to accurately sample and dispense viscous liquids, that the act of drawing or dispensing the substance may, if the substance is volatile, cause the substance to vaporise, they block easily, condensation and ice can form easily on their outer surface when handling cold liquids, and in that they cannot handle solids or suspension of solids in slurry form.

Another attempted solution to the above problems has been to provide both the sampling/dispensing device and the reaction vessel as part of a larger apparatus contained within an air tight casing which can be filled with an inert gas. Such a system is, however, cumbersome, and requires a large amount of gas, making it expensive to purchase and operate.

The present invention is directed toward providing a chemical sampling or dispensing apparatus which isolates the chemical from air and moisture, yet which is able to deal with solids, viscous and volatile liquids.

DE-A-4432599 discloses a gas shroud with fixed gas dispenser, which can be placed over a vessel. EP-A-517606, US-A-4804372, and US-A-4110590 disclose systems employing gas supplies.

According to the present invention there is provided a chemical sampling or dispensing apparatus comprising:
a sleeve having a first end arranged to engage with an inlet to a vessel, and a gas inlet for receiving, in use, an inert gas and directing it toward the first end of the sleeve, wherein the sleeve is arranged to at least partially surround a chemical sampling or dispensing means; and
a chemical sampling or dispensing means arranged to dispense or take samples from a vessel inlet through the first end of the sleeve, characterised in that the chemical sampling or dispensing means is arranged to slide axially within the sleeve.

The chemical sampling or dispensing means may be a pipette, fluid line from a pump, syringe or displacement plunger device, and may be arranged to slide axially within the sleeve.

The sleeve may be formed from two shrouds, one arranged to slide within the other, the sliding engagement of the two shrouds being controlled by engagement of the first end of the sleeve with the vessel inlet and either the pressure of input inert gas or a biasing member. Alternatively, the sleeve may be of unit construction and be arranged such that the area to be shrouded is brought inside the shroud to make connection with the sampling device. The first end of the sleeve may be open and may incorporate a gas seal or venturi flow arrangement to ensure that no air or moisture enters the sleeve. Alternatively, it may be covered by a hinged sealing door

The apparatus may be arranged to be hand held or may be arranged to be operated by a robot.

The provision of a sleeve filled with a flow of inert gas ensures that no air or moisture is able to enter the region surrounding the sampling or dispensing means and contaminate the sample and eliminates the formation of condensation or ice.

A further advantage of the invention is that it is not restricted to use with needles and self sealing septa. An advantage of the invention is that the shroud gas need only be switched on when a transfer is being made, thus saving expensive gas. It can allow larger objects to access vessels through the openings. For example the shroud can accommodate a decapper and can provide a gas shield while the vessel is decapped, accessed by a large probe, and then recapped. The shroud may incorporate a means of opening or de-capping a vessel. The shroud itself may open a cap, or ports in a cap, by push, pull or rotary action. It also allows addition of solids, for example powders, by use of a shrouded spatula device, hopper or packed tube or any number of gases from piped supplies situated within the shroud. The insert gas supply may be arranged to flow through the inside of the shroud such that it may cool electronic, electrical, optical and mechanical components and/or protect them from corrosive fumes. These components could include for example circuits, motors, solenoids, sensors and analytical equipment. For example, the shroud may contain a non-contact infra-red thermocouple which can be used to measure the temperature of the contents of a vessel by imaging the contents through an opened port. Sensors attached to the shroud may be used for feed-back control of the shroud functions, including sensing of the cap position, volume of the vessel and monitoring and control of the gas flow to maintain the gas blanket.

The vessel may be a reaction vessel or storage container.

One example of the present invention will now be described with reference to the accompanying drawings, in which:
Figure 1 shows a device according to the present invention prior to engagement with the inlet to a vessel; and
Figure 2 shows an example of the present invention after engagement with a vessel.

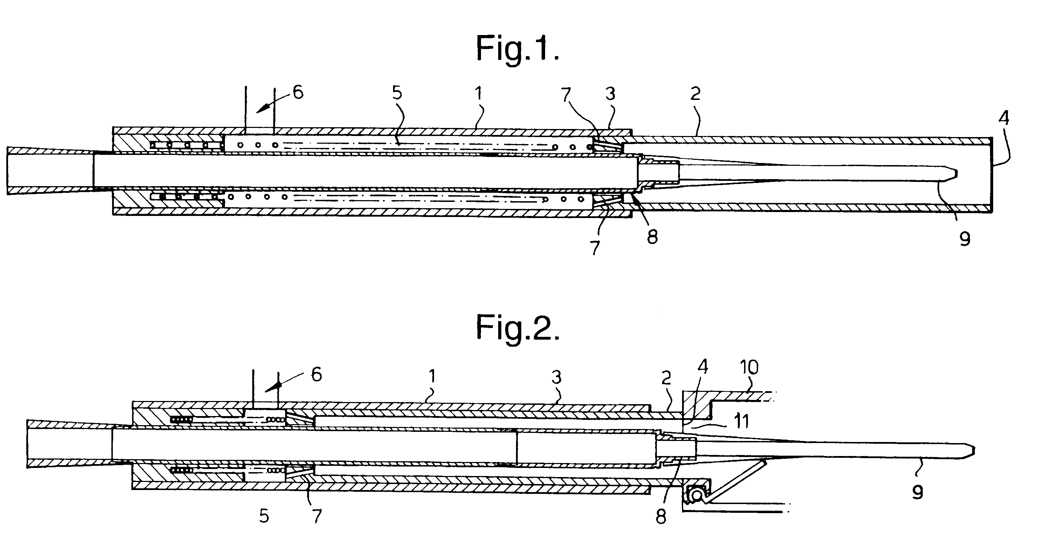

Referring to Figure 1, a chemical sampling or dispensing apparatus has a sleeve 1 which comprises an inner shroud 2 and outer shroud 3. The two shrouds 2, 3 are arranged so that the inner shroud 2 slides telescopically within the outer shroud 1. The inner shroud 2 has an open end 4 which is arranged to engage with an inlet to the vessel 10 (Fig. 2) . A biasing spring 5 biases the inner shroud 2 outward from the outer shroud 3. A gas inlet 6 is provided on the outer shroud 3 so that inert gas, such as Argon or Nitrogen, can be pumped into the outer shroud 3 and on to the inside of inner shroud 2 via passageways 7. The inert gas can then pass out of the open end 4 of the inner shroud 2, creating a flow of inert gas through the sleeve.

A chemical sampling or dispensing device 8 is positioned within the sleeve 1 and arranged so that its sampling or dispensing end 9 is adjacent to the open end 4 of the inner shroud 2. In this Figure, a plunger displacement device, which is capable of both dispensing and sampling chemicals is shown, although it will be appreciated that this device could be replaced with equivalent devices, such as a syringe and needle, liquid supply pipe or pipette arrangement.

Referring to Figure 2, when the apparatus is positioned to engage with an inlet 11 to a vessel 10, the inner shroud 2 slides within the outer shroud 3, and allows the sampling or dispensing end 9 of the sampling or dispensing apparatus 8 to enter the inlet to the vessel 10. Because of the flow of inert gas, even if the open end 4 of the inner shroud 2 does not provide a tight seal with the inlet to the vessel 10, no air or moisture is able to enter the sleeve 1 and come into contact with the sampling or dispensing apparatus 8. Once a sample has been dispensed or taken, the apparatus can be moved away from the inlet to the vessel 10 and, because of the spring biasing of the inner shroud 2, the sampling or dispensing end 9 of the sampling or dispensing apparatus 8 never comes into contact with the air. Even when the apparatus is fully removed, because inert gas is flowing around the dispensing or sampling end 9, a blanket of inert gas is provided which prevents air contact.

A prototype of the device shown in Figure 1, having a glass shroud of 16mm inside diameter, was tested for oxygen exclusion. An electrochemical oxygen probe was calibrated to read oxygen concentrations in the range 0-100% of the normal atmospheric oxygen partial pressure. The 0% calibration point was obtained with a sodium sulphite zero oxygen standard solution. The 100% calibration point was measured in free atmospheric air. The oxygen sensor was placed in the mouth of the shroud, at a position corresponding to the end of the pipette tip 9. Dry zero-grade nitrogen gas was introduced into the shroud through inlet 6 and the gas flow was gradually increased until the meter read 0% oxygen. This corresponded with a flow rate of approximately 0.35 standard litres per minute (SLPM). The flow rate was fixed at 0.4 SLPM and the device was tested for air exclusion using a colour-change oxygen sensitive reagent (sodium dithionite, 10% KOH and indigo carmine, which turns from yellow to blue in the presence of oxygen). The air sensitive reagent was taken up into the pipette tip 9 from a gas-blanketed vessel. The device was then left standing in free air. No colour change was observed after one hour, indicating that little or no oxygen had contaminated the tip contents. By contrast, the reagent changed colour almost immediately in the absence of blanket gas. A series of tests were carried out where an oxygen sensitive reagent was repeatedly transferred between vessels. Again, no ingress of oxygen was observed.

The stream of gas coming out of the end of the shroud can provide some protection from air contamination some distance beyond the end of the shroud tube.

It will be appreciated that the reaction vessel may have a sealing lid or membrane 12, in which case, the open end 4 of the inner shroud 2, or (as shown) the sampling/dispensing device 8, may be arranged to break the seal on contact with the vessel 10.

As mentioned above, the spring 5 could be replaced by increased inert gas pressure, which could provide an equivalent biasing force. Alternatively, the extension and retraction of the shroud tube may be motorised such that the shroud may be set to any position at will. This is useful where, for example, the target vessel could be knocked over or moved if the shroud was to come in contact with it. It is also desirable to retract the shroud to allow cleaning, inspection or replacement of the sampling device. The shroud retraction mechanism can form part of a tool or pipette pick-up mechanism, and may incorporate a limit sensor to prevent damage in the event of encountering an obstruction.

As also mentioned above, the apparatus may be adapted to be moved and controlled by a robot, or may, alternatively, be a handheld device.

A further advantage of the present invention lies in the possibility for the gas inlet 6 to provide gas to the vessel 10 once the sleeve 1 has engaged with it. This allows for the application of gas to the vessel 10 to assist the reaction by agitating vessel contents or in order to add an inert gas blanket to the vessel 10. Furthermore, gas may be supplied via the gas inlet 6 to displace liquid from the vessel 10.

The invention can also be used for transferring samples in microbiology or radiochemistry. The shroud can be supplied with a flow of sterile gas (or air). The gas blanket will maintain the sterility of any sampling device contained within the shroud. This is useful for taking and transferring samples where contamination needs to be avoided.

The invention can be configured to shroud several openings simultaneously, independently or collectively. For example, a system with multiple shroud would allow independent shrouding of multiple openings. This would prevent vapour from one opening contaminating an adjacent opening. Alternatively, a single shroud may be used to blanket multiple openings, such as a 96-well plate used in high throughput screening.

The invention may also be configured with concentric inner and outer shrouds. For example, a concentric shroud arrangement, with an inner shroud supplying gas and an outer shroud connected to a fume extraction system can be used to shroud an open port, while simultaneously taking away noxious or hazardous fumes. This embodiment of the invention can be used for the handling and containment of hazardous substances, such as chemical, biological and radiochemical samples, where vapours could be hazardous to the operator.

The shroud may be manufactured of glass, ceramic, plastic or metal or other suitable material. The shroud could be made of lead or another radiation shielding material to protect an operator when the system is used with radioactive chemicals. Where the shroud is being used in the transfer of aggressive substances, only the end of the shroud needs to be made from an inert material because the shroud gas protects the uppermost internal parts of the shroud.

## Claims

1. A chemical sampling or dispensing apparatus comprising:
a sleeve (1) having a first end (4) arranged to engage with an inlet to a vessel, and a gas inlet (6) for receiving, in use, an inert gas and directing it toward the first end of the sleeve, wherein the sleeve is arranged to at least partially surround a chemical sampling or dispensing means; and
a chemical sampling or dispensing means (8) arranged to dispense or take samples from the vessel inlet through the first end of the sleeve, characterised in that the chemical sampling or dispensing means is arranged to slide axially within the sleeve.

2. An apparatus according to claim 1, wherein the chemical sampling or dispensing means (8) is a pipette.

3. An apparatus according to claim 1, wherein the chemical sampling or dispensing means (8) is a fluid line from a pump.

4. An apparatus according to claim 1, wherein the chemical sampling or dispensing means (8) is a syringe.

5. An apparatus according to claim 1, wherein the chemical sampling or dispensing means (8) is a displacement plunger device.

6. An apparatus according to claim 1, wherein the chemical sampling or dispensing means (8) is a solids handling device.

7. An apparatus according to claim 1, wherein the chemical sampling or dispensing means (8) is a gas pipe.

8. An apparatus according to any of the preceding claims, wherein the sleeve (1) is formed from two shrouds (2,3), one arranged to slide within the other, the sliding engagement of the two shrouds being controlled by engagement of the first end (4) of the sleeve (1) with the vessel inlet and either the pressure of input inert gas or a biasing member.

9. An apparatus according to any of claims 1 to 7, wherein the sleeve (1) is unitary in construction and is arranged such that the area to be shrouded is brought inside the sleeve to make connection with the sampling device (8).

10. An apparatus according to any of the preceding claims, wherein the first end of the sleeve (1) is open.

11. An apparatus according to any of claims 1 to 9, wherein the first end (4) of the sleeve (1) incorporates a gas seal or venturi flow arrangement.

12. An apparatus according to any of claims 1 to 9, wherein the first end (4) of the sleeve (1) is covered by a hinged sealing door.

13. An apparatus according to any of the preceding claims, wherein the apparatus is arranged to be hand held.

14. An apparatus according to any of claims 1 to 12, wherein the apparatus is arranged to be operated by a robot.

15. An apparatus according to any of the preceding claims, wherein the sleeve accommodates a decapper and can provide a gas shield while the vessel is decapped, accessed by a large probe, and then recapped.

16. An apparatus according to any of the preceding claims, wherein the sleeve (1) incorporates a means of opening or de-capping a vessel.

17. An apparatus according to any of the preceding claims, wherein the sleeve (1) itself opens a cap by push, pull or rotary action.

18. An apparatus according to any of the preceding claims, wherein the insert gas supply is arranged to flow through the inside of the sleeve (1) such that it may cool components in the apparatus and/or protect the components from corrosive fumes.

19. An apparatus according to any of the preceding claims, wherein the sleeve (1) contains a sensor.

20. An apparatus according to any of the preceding claims, wherein sensors are attached to the sleeve (1) for feed-back control of the sleeve functions, including sensing of the cap position, volume of the vessel and monitoring and control of the gas flow to maintain the gas blanket.

## Patentansprüche

1. Probenentnahme- oder -Abgabevorrichtung für die Chemie, die folgendes aufweist:
eine Hülse (1) mit einem ersten Ende (4), das dazu ausgebildet ist, mit einem Einlaß in einen Behälter in Eingriff zu treten, und mit einem Gaseinlaß (6), um im Gebrauch ein Inertgas zu erhalten und dieses in Richtung zu dem ersten Ende der Hülse zu leiten, wobei die Hülse dazu ausgebildet ist, eine Probenentnahme- oder -Abgabeeinrichtung für die Chemie zumindest teilweise zu umschließen; und
eine Probenentnahme- und -Abgabeeinrichtung (8) für die Chemie, die dazu ausgebildet ist, Proben durch das erste Ende der Hülse hindurch aus dem Behältereinlaß zu entnehmen oder dorthin abzugeben,
dadurch gekennzeichnet,
daß die Probenentnahme- oder -Abgabeeinrichtung für die Chemie in der Hülse axial verschiebbar angeordnet ist.

2. Vorrichtung nach Anspruch 1,
wobei die Probenentnahme- oder-Abgabeeinrichtung (8) für die Chemie eine Pipette ist.

3. Vorrichtung nach Anspruch 1,
Wobei die Probenentnahme- oder -Abgabeeinrichtung (8) für die Chemie eine Fluidleitung von einer Pumpe ist.

4. Vorrichtung nach Anspruch 1,
wobei die Probenentnahme- oder -Abgabeeinrichtung (8) für die Chemie eine Spritze ist,

5. Vorrichtung nach Anspruch 1,
wobei die Probenentnahme- oder -Abgabeeinrichtung (8) für die Chemie eine Verdrängungskolbenvorrichtung ist.

6. Vorrichtung nach Anspruch 1,
wobei die Probenentnahme- oder -Abgabeeinrichtung (8) für die Chemie eine Einrichtung zum Handhaben von festen Stoffen ist.

7. Vorrichtung nach Anspruch 1,
wobei die Probenentnahme- oder -Abgabeeinrichtung (8) für die Chemie ein Gasrohr ist.

8. Vorrichtung nach einem der vorausgehenden Ansprüche,
wobei die Hülse (1) aus zwei Umhüllungen (2, 3) gebildet ist, von denen die eine in der anderen gleitend verschiebbar angeordnet ist, wobei der Gleiteingriff der beiden Umhüllungen durch den Eingriff des ersten Endes (4) der Hülse (1) mit dem Behältereinlaß und entweder durch den Druck des zugeführten Inertgases oder durch ein Vorspannungselement gesteuert wird.

9. Vorrichtung nach einem der Ansprüche 1 bis 7,
wobei die Hülse (1) eine einheitliche Konstruktion besitzt und derart ausgebildet ist, daß der zu umhüllende Bereich im Inneren der Hülse angeordnet ist, um eine Verbindung mit der Probenentnahmevorrichtung (8) herzustellen.

10. Vorrichtung nach einem der vorausgehenden Ansprüche,
wobei das erste Ende der Hülse (1) offen ist.

11. Vorrichtung nach einem der Ansprüche 1 bis 9,
wobei das erste Ende (4) der Hülse (1) eine Gasdichtungsoder Venturiströmungsanordnung aufweist.

12. Vorrichtung nach einem der Ansprüche 1 bis 9,
wobei das erste Ende (4) der Hülse (1) von einer angelenkten Abdichtklappe abgedeckt ist.

13. Vorrichtung nach einem der vorausgehenden Ansprüche,
wobei die Vorrichtung dafür ausgebildet ist, in der Hand gehalten zu werden.

14. Vorrichtung nach einem der Ansprüche 1 bis 12,
wobei die Vorrichtung dazu ausgebildet ist, von einem Roboter betätigt zu werden.

15. Vorrichtung nach einem der vorausgehenden Ansprüche, wobei an der Hülse ein Deckelentferner vorgesehen ist und die Hülse in der Lage ist, eine Gasabschirmung zu schaffen, während die Deckelentfernung von dem Behälter, der Zugriff mittels einer großen Sonde sowie das anschließende Wiederaufsetzen des Deckels erfolgen.

16. Vorrichtung nach einem der vorausgehenden Ansprüche, wobei die Hülse (1) eine Einrichtung zum Öffnen eines Behälters oder zum Entfernen eines Deckels von diesem aufweist.

17. Vorrichtung nach einem der vorausgehenden Ansprüche, wobei die Hülse (1) selbst einen Deckel durch Drücken, Ziehen oder eine Drehwirkung öffnet.

18. Vorrichtung nach einem der vorausgehenden Ansprüche, wobei die Inertgaszufuhr dazu ausgelegt ist, durch das Innere der Hülse (1) zu strömen, so daß sie Komponenten in der Vorrichtung kühlen und/oder Komponenten vor korrosiven Dämpfen schützen kann.

19. Vorrichtung nach einem der vorausgehenden Ansprüche, wobei die Hülse (1) einen Sensor enthält.

20. Vorrichtung nach einem der vorausgehenden Ansprüche, wobei Sensoren an der Hülse (1) für eine Rückkopplungssteuerung der Hülsenfunktionen angebracht sind, die das Abtasten der Deckelposition, das Messen des Volumens des Behälters sowie die Überwachung und Steuerung der Gasströmung zur Aufrechterhaltung der Gasdecke beinhalten.

## Revendications

1. Appareil d'échantillonnage ou de distribution de substances chimiques comprenant :
un manchon (1) comportant une première extrémité (4) prévue pour coopérer avec un orifice d'entrée d'un récipient, et un orifice d'entrée (6) de gaz destiné à recevoir, en utilisation, un gaz inerte et à le diriger vers la première extrémité du manchon, dans lequel le manchon est prévu pour entourer au moins partiellement un moyen d'échantillonnage ou de distribution de substances chimiques; et
un moyen (8) d'échantillonnage ou de distribution de substances chimiques prévu pour distribuer ou prendre des échantillons provenant de l'orifice d'entrée du récipient par la première extrémité du manchon, caractérisé en ce que le moyen d'échantillonnage ou de distribution de substances chimiques est prévu pour coulisser axialement à l'intérieur du manchon.

2. Appareil selon la revendication 1, dans lequel le moyen (8) d'échantillonnage ou de distribution de substances chimiques est une pipette.

3. Appareil selon la revendication 1, dans lequel le moyen (8) d'échantillonnage ou de distribution de substances chimiques est une conduite hydraulique provenant d'une pompe.

4. Appareil selon la revendication 1, dans lequel le moyen (8) d'échantillonnage ou de distribution de substances chimiques est une seringue.

5. Appareil selon la revendication 1, dans lequel le moyen (8) d'échantillonnage ou de distribution de substances chimiques est un dispositif à plongeur à déplacement.

6. Appareil selon la revendication 1, dans lequel le moyen (8) d'échantillonnage ou de distribution de substances chimiques est un dispositif de manipulation de solides.

7. Appareil selon la revendication 1, dans lequel le moyen (8) d'échantillonnage ou de distribution de substances chimiques est un tuyau à gaz.

8. Appareil selon l'une quelconque des revendications précédentes, dans lequel le manchon (1) comprend deux éléments tubulaires (2, 3), prévus pour coulisser l'un dans l'autre, la coopération en coulissement des deux éléments tubulaires étant commandée par la coopération de la première extrémité (4) du manchon (1) avec l'orifice d'entrée du récipient et soit la pression du gaz inerte injecté soit un élément de précontrainte.

9. Appareil selon l'une quelconque des revendications 1 à 7, dans lequel le manchon (1) est de construction unitaire et est agencé de façon que la zone devant être emboîtée est amenée à l'intérieur du manchon pour réaliser une connexion avec le dispositif d'échantillonnage (8).

10. Appareil selon l'une quelconque des revendications précédentes, dans lequel la première extrémité du manchon (1) est ouverte.

11. Appareil selon l'une quelconque des revendications 1 à 9, dans lequel la première extrémité (4) du manchon (1) comprend un agencement d'étanchéité aux gaz ou d'écoulement venturi.

12. Appareil selon l'une quelconque des revendications 1 à 9, dans lequel la première extrémité (4) du manchon (1) est couvert par une porte d'obturation à charnière.

13. Appareil selon l'une quelconque des revendications précédentes, dans lequel l'appareil est prévu pour être tenu en main.

14. Appareil selon l'une quelconque des revendications 1 à 12, dans lequel l'appareil est prévu pour être actionné par un robot.

15. Appareil selon l'une quelconque des revendications précédentes, dans lequel le manchon reçoit un décapuchonneur et peut fournir un écran de gaz pendant que l'on décapuchonne le récipient, que l'on y fait entrer une grande sonde, puis qu'on le recapuchonne.

16. Appareil selon l'une quelconque des revendications précédentes, dans lequel le manchon (1) comprend un moyen permettant d'ouvrir ou de décapuchonner le récipient.

17. Appareil selon l'une quelconque des revendications précédentes, dans lequel le manchon (1) lui-même ouvre un capuchon par une action de poussée, de traction ou de rotation.

18. Appareil selon l'une quelconque des revendications précédentes, dans lequel le gaz injecté est adapté pour s'écouler à l'intérieur du manchon (1) de façon qu'il puisse refroidir les composants de l'appareil et/ou protéger les composants des fumées corrosives.

19. Appareil selon l'une quelconque des revendications précédentes, dans lequel le manchon (1) contient un capteur.

20. Appareil selon l'une quelconque des revendications précédentes, dans lequel des capteurs sont reliés au manchon (1) pour l'asservissement des fonctions du manchon, comprenant la détection de la position du capuchon, le volume du récipient et le contrôle et la commande de l'écoulement de gaz pour maintenir la couverture de gaz.
